# NOUVEAU FASCICULE DE BREVET EUROPEEN

(11) **EP 3 453 515 B2**
(45) Date de publication et mention de la décision concernant l'opposition: **12.04.2023**
(45) Mention de la délivrance du brevet: 29.04.2020
(21) Numéro de dépôt: 18191476.3
(22) Date de dépôt: 29.08.2018
(51) Int. Cl.: B29C 49/12, B29C 49/78, B29C 49/06, B29C 49/36, B29L 31/00

(54) **DISPOSITIF ET PROCÉDÉ DE SOUFFLAGE**
VORRICHTUNG UND VERFAHREN ZUM BLASFORMEN.
APPARATUS AND METHOD FOR BLOWMOLDING

(30) Priorité: 08.09.2017 FR 1758308
(43) Date de publication de la demande: 13.03.2019
(73) Titulaire: Sidel Participations, 76930 Octeville-sur-Mer (FR)
(72) Inventeur: BRACHET, Vincent, 76930 Octeville sur Mer (FR)
(74) Mandataire: Sidel Group

(56) Documents cités:
- EP-A1- 2 199 061
- EP-A1- 3 109 029
- DE-A1-102009 024 408
- DE-A1-102012 106 310
- DE-A1-102015 211 136
- US-A1- 2011 260 373
- US-A1- 2017 157 834
- US-B1- 6 736 625

## Description

La présente invention entre dans le domaine de la fabrication de récipients par soufflage ou par étirage soufflage. Les documents US2011/260373A1, DE102015-211136A1, US6736625B1 et US2017/157834A1 sont représentatifs de l'arrière plan technologique.

De manière connue, la fabrication de récipients en matériau plastique, tels des flacons ou bouteilles, peut s'effectuer au cours d'une opération de mise en forme par injection-soufflage à partir de paraisons communément appelées « préformes ». Ces préformes sont obtenues préalablement lors d'une étape d'injection de matière plastique. Chaque préforme comprend un corps pourvu d'un fond fermé à une extrémité et un col ouvert à l'extrémité opposée. Ledit col ouvert est surmonté d'un buvant, dont la forme est définitive et ne changera pas au cours de l'opération de soufflage. Le corps et le col sont séparés par une collerette, par laquelle la préforme et le récipient qui en est issu, peuvent être suspendus.

Pour ce faire, une préforme est chauffée jusqu'à sa température de transition vitreuse puis introduite au sein d'un moule, constitué d'une matrice concave en au moins deux coquilles complémentaires articulées, dont l'évidement intérieur correspond à la forme du récipient à obtenir. Ladite préforme est maintenue dans le moule par sa collerette, tandis que le reste de son corps se retrouve pendant au sein dudit évidement. Une tuyère de soufflage mobile verticalement est descendue et vient coiffer la préforme est appliquée hermétiquement par l'intermédiaire d'une cloche sur le moule. Un fluide sous pression, généralement de l'air comprimé, est injecté au travers dudit col ouvert.

Plus avant, l'étape de soufflage peut comprendre une opération d'étirage. Une fois la préforme introduite et enserrée au sein du moule, refermé de façon étanche par la cloche de ladite tuyère, une tige d'étirage, mobile verticalement, descend en traversant la tuyère et pénètre au travers dudit col ouvert de ladite préforme. Lors d'une opération de présoufflage, l'action de la tige et d'une quantité d'air de présoufflage crée une bulle au niveau du corps de la préforme, avant de poursuivre sa course descendante en finalisant le soufflage, sorte que les parois extérieures de la préforme se déforment et viennent au contact de la surface intérieure du moule, créant le récipient final.

Ensuite, la tige est remontée jusqu'à sortir du récipient, puis la tuyère est remontée et enfin les coquilles du moule sont ouvertes, libérant ledit récipient.

Actuellement, les machines réalisant ces opérations de soufflage comportent plusieurs dispositifs de soufflage, disposés sur un carrousel, afin de créer une cinématique à cycle continu, tout en assurant les cadences élevées de production. En vue de cette optimisation, un dispositif de soufflage comporte un unique moteur linéaire entraînant en déplacement vertical une première navette supportant ladite tige d'étirage. Une seconde navette supportant la ladite tuyère est prévue libre selon un déplacement vertical colinéaire à celui de ladite première navette. De plus, les première et seconde navettes sont pourvues de moyens d'accouplement, de préférence prévu magnétique, permettant :
d'une part, de solidariser ladite première navette avec la seconde navette, assurant conjointement leur déplacement sous l'action du moteur de ladite première navette, selon une course descendante jusqu'à ce que ladite tuyère viennent en butée en appui hermétique en partie supérieure du moule et en recouvrement du col ouvert de la préforme ;
d'autre part, de désolidariser la première navette afin qu'elle poursuive sa course descendante d'insertion de ladite tige au sein du moule pour réaliser l'opération d'étirage et de soufflage, puis une course ascendante au cours de laquelle ladite tige ressort au moins partiellement dudit moule ; et
d'autre part, de nouveau solidariser la seconde navette avec ladite première navette lors de la poursuite de la course ascendante, en vue d'extraire complètement ladite tige du récipient ainsi créé tout en remontant ladite tuyère, libérant le buvant dudit récipient avant qu'il ne soit extrait au moment de l'ouverture du moule.

En somme, le mouvement consiste depuis une position haute en une descente sous l'effet d'une seule motorisation de la tige solidarisée magnétiquement avec la tuyère, jusqu'à ce que la cloche de ladite tuyère arrive en butée, que la tige se désolidarise puis continue de descendre, avant de remonter et se solidariser de nouveau avec ladite tuyère au travers d'un accouplement aimanté, l'ensemble remontant jusqu'à ladite position haute.

La problématique principale de cette opération de soufflage réside, lors d'un cycle de production de récipients, dans le temps nécessaire pour effectuer l'aller-retour des navettes, selon des courses déterminées avec précision, dépendantes du format des préformes. L'optimisation des dispositifs de soufflage requiert de minimiser lesdites courses des première et seconde navettes.

Ainsi, les dispositifs de soufflage connus présentent un inconvénient majeur lié à l'unique moteur équipé d'un seul contrôleur actionnant la première navette, tandis que la seconde navette est libre, asservie au déplacement de ladite première navette. Dès lors, il est difficile de modifier la course de la seconde navette, induisant une modification des pièces mécaniques sur la machine, au cours d'une opération de maintenance pour chaque dispositif de soufflage.

En outre, le changement d'une des courses de la première navette induit un réglage mécanique précis au niveau de chaque dispositif de soufflage, opération fastidieuse et précaire, entraînant des risques d'erreurs et une baisse de la productivité.

De façon connexe, la masse et l'encombrement des éléments mobiles, en particulier ceux de la première navette qui doivent supporter en sus le poids de la seconde navette dans le même encombrement, et qui doivent assurer leur déplacement conjointement en accouplement, induisent une puissance adaptée et élevée de l'unique moteur.

L'invention a pour but de pallier les inconvénients de l'état de la technique en proposant de rendre indépendants les déplacements des première et seconde navettes, tout en respectant la contrainte de l'encombrement restreint disponible. En particulier, l'invention envisage de ne plus asservir les déplacements de la seconde navette à ceux de la première. L'invention prévoit d'équiper la seconde navette d'un actionnement de son déplacement qui lui est propre. Ainsi, l'invention permet de dissocier les courses des première et seconde navettes.

Dès lors, l'invention permet de régler indépendamment et directement la course de chaque navette, sans intervenir mécaniquement sur chaque dispositif de soufflage. Les courses étant indépendantes, il est alors possible de régler chacune d'entre elles, pour la première comme pour la seconde navette, optimisant le temps nécessaire à l'opération de soufflage. En particulier, d'une part, la course descendante de la seconde navette peut s'opérer avant la course descendante de la première navette, tandis que la course ascendante de ladite seconde navette peut s'effectuer dès le début ou après la remontée de ladite première navette, sans attendre l'accouplement magnétique de l'état de la technique dont la présente invention s'affranchit.

En descendant plus tôt la cloche et en la remontant plus tôt ou plus tard, par rapport au positionnement relatif de la tige, il est alors possible de diminuer le cycle de production, voire de modifier le déroulement d'un tel cycle en maintenant plus longtemps l'étanchéité conférée par ladite cloche.

De plus, afin de rester dans l'encombrement limité des dispositifs de soufflage, l'invention envisage une motorisation prévue électrique et pourvue d'un unique contrôleur de deux actionneurs distincts pour chacune des première et seconde navettes, ledit contrôleur assurant les déplacements indépendants des courses de chacune desdites navettes.

Ainsi, il est possible de diminuer la masse des navettes, en particulier de la première navette, qui n'a plus à supporter le poids de la seconde navette devenue autonome. La motorisation est donc simplifiée, nécessitant une puissance moins élevée pour déplacer les poids désormais séparés des premières et secondes navettes. On obtient aussi un gain de place et d'encombrement, notamment au travers de liaisons directes entre le seul contrôleur et les actionneurs dédiés à chaque navette.

De plus, l'unique contrôleur commandant les deux actionneurs permet de régler indépendamment et avec précision chaque course des première et seconde navettes, en particulier de modifier la course de la cloche de l'ordre du millimètre pour s'adapter à tout format de préforme.

Pour ce faire, la présente invention a pour objet un dispositif de soufflage, comprenant au moins un premier support mobile équipé d'une tige d'étirage et au moins un second support mobile d'une tuyère, lesdits premier support et second support étant mobiles selon des déplacement verticaux réciproquement selon au moins une première course et au moins une seconde course. Un tel dispositif de soufflage se caractérise par le fait que ledit dispositif comporte des moyens de motorisation électrique desdits premier support et second support, lesdits moyens de motorisation comportant au moins un premier actionneur des déplacements dudit premier support et au moins un second actionneur des déplacements dudit second support, lesdits moyens de motorisation commandant de façon différenciée chaque première course et chaque seconde course.

On entend par « commander de façon différenciée » le fait que le premier actionneur et le deuxième actionneur soit commandé de façon indépendante l'un de l'autre de manière que l'action du premier actionneur puisse être, au choix, identique ou différente de l'action du deuxième actionneur.

Selon l'invention, lesdits moyens de motorisation comprennent un unique contrôleur conçu pour commander de manière indépendante le premier actionneur et le second actionneur.

Selon l'invention, lesdits moyens de motorisation sont constitués par un moteur linéaire pourvu au moins d'un premier chariot comprenant ledit premier actionneur et d'un second chariot comprenant ledit second actionneur.

Le premier chariot est mobile le long d'une première trajectoire d'actionnement et le second chariot est mobile selon une deuxième trajectoire d'actionnement

Avantageusement, lesdites première et deuxième trajectoires d'actionnement sont rectilignes. En particulier, lesdites première et deuxième trajectoires d'actionnement peuvent être coaxiales.

Avantageusement, lesdites première et deuxième trajectoires d'actionnement peuvent être parallèles l'une à l'autre. En particulier, lesdites première et deuxième trajectoires d'actionnement peuvent être en totalité ou en partie confondues. Lesdits premier et second chariots peuvent être montés selon un déplacement coaxial.

Un dispositif de soufflage selon l'invention peut être utilisé selon unprocédé de soufflage, dans lequel au moins :
- on introduit une préforme au sein d'un moule, la préforme étant pourvue d'un buvant ;
- on déplace selon une première course descendante une tuyère pour raccorder hermétiquement la tuyère (5) avec ledit buvant ;
- on déplace électriquement selon une seconde course descendante une tige d'étirage jusqu'à pénétrer au sein de ladite préforme au travers de ladite tuyère ;
- on déplace électriquement selon une première course ascendante ladite tige jusqu'à s'extraire de ladite préforme ;
- on déplace selon une seconde course ascendante ladite tuyère ;

ledit procédé se caractérisant en ce que ledit déplacement de la tuyère selon la première course descendante utilise un moteur électrique actionné indépendamment du déplacement de la tige d'étirage selon la seconde course descendante,
et ledit déplacement de la tuyère selon la seconde course ascendante utilise ledit moteur électrique actionné indépendamment du déplacement de la tige d'étirage selon la première course ascendante.

Selon d'autres caractéristiques additionnelles, un tel procédé de soufflage peut consister à commander au travers d'un unique contrôleur au moins deux chariots distincts actionnant de façon différenciée, d'une part, la première course descendante et la seconde course ascendante de ladite tuyère et, d'autre part, la seconde course descendante et la première course ascendante de ladite tige.

D'autres caractéristiques et avantages de l'invention ressortiront de la description détaillée qui va suivre des modes de réalisation non limitatifs de l'invention, en référence aux figures annexées dans lesquelles :
la figure 1 représente schématiquement une vue en perspective de dessus de trois-quarts d'un mode de réalisation d'un dispositif de soufflage ; et
les figures 2 à 4 représentent schématiquement des vues simplifiées selon une coupe verticale d'un dispositif de soufflage, montrant différents exemples de positions successives et de déplacements relatifs des première et seconde navettes l'une par rapport à l'autre au cours d'une opération de soufflage.

La présente invention concerne le soufflage, en particulier l'étirage soufflage de préforme.

A cet effet, tout d'abord, l'invention vise un dispositif de soufflage 1.

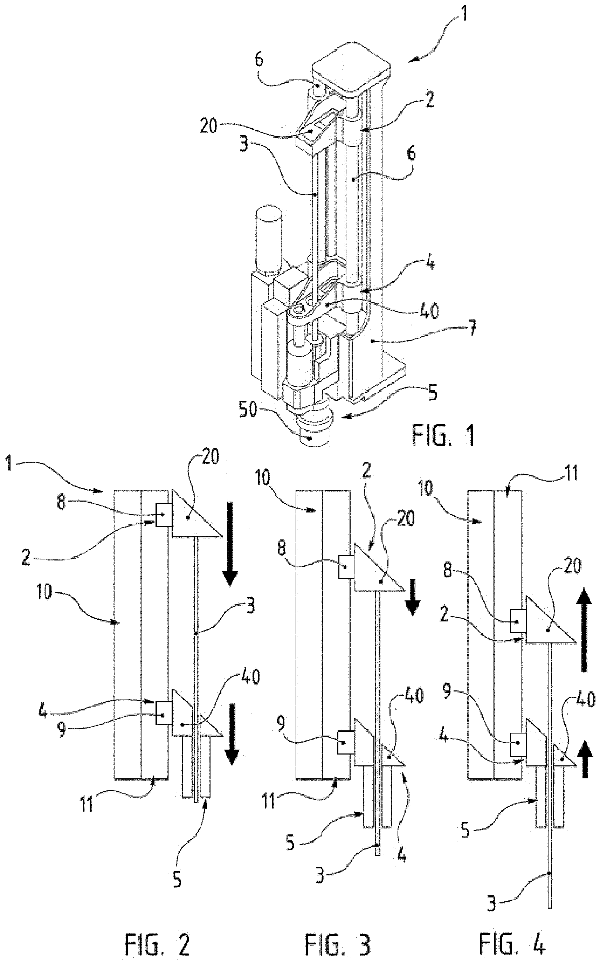

Un exemple d'un tel dispositif de soufflage 1 est représenté sur la figure 1. Il comprend au moins un premier support 2 équipé d'une tige d'étirage 3 et au moins un second support 4 d'une tuyère 5.

Lesdits premier support 2 et second support 4 sont prévus mobiles selon des déplacements verticaux réciproquement selon au moins une première course et au moins une seconde course.

Pour ce faire, de façon non limitative, comme visible sur la figure 1, ledit premier support 2 peut être constitué d'une première équerre 20, montée en coulissement selon une translation verticale le long de deux arbres 6. Ces deux arbres 6 sont parallèles et solidarisés sur une embase 7 aux niveaux de leurs extrémités haute et basse. Ladite embase 7 est prévue fixe, solidaire d'un carrousel (non représenté).

Ladite première équerre 20 supporte en face inférieure la tige d'étirage 3 au niveau de son extrémité supérieure, de façon déportée latéralement par rapport au plan contenant lesdits arbres 6. Dès lors, la tige d'étirage 3 s'étend verticalement sous le premier support 2, orientée vers le bas.

Ledit second support 4 peut être constitué d'une seconde équerre 40 qui soutient ladite tuyère 5. En particulier une cloche 50 équipant cette tuyère 5 est montée sous la seconde équerre 40 dudit second support 4.

On notera que la seconde équerre 40 peut être pourvue d'une ouverture qui peut être traversée par ladite tige d'étirage 3 au cours de ses déplacements, l'autorisant à rentrer et sortir de façon étanche par rapport la cloche 50 de la tuyère 5, au travers d'orifices prévus et adaptés à cet effet.

Ladite seconde équerre 40 est montée en coulissement selon une translation verticale le long des mêmes deux arbres 6. Ainsi, les déplacements respectifs des premier support 2 et second support 4 s'effectuent de façon colinéaire.

Comme évoqué précédemment, les premier support 2 et second support 4 se déplacent respectivement selon au moins une première course et selon au moins une seconde course. En particulier, le second support 4 peut déplacer la tuyère 5 selon une première course descendante, tandis que le premier support 2 peut déplacer la tige d'étirage 3 selon une seconde course descendante. Ces courses descendantes s'effectuent depuis des postions hautes vers des positions basses, au travers de positions intermédiaires. Alors, le premier support 2 peut déplacer ladite tige d'étirage 3 selon une première course ascendante, tandis que le second support 4 peut déplacer la tuyère 5 selon une seconde course ascendante. Lesdites courses ascendantes s'effectuent depuis lesdites positions basses vers lesdites positions hautes, au travers de positions intermédiaires.

En outre, chacune des courses descendantes ou ascendantes peut s'effectue en une ou plusieurs fois, respectivement sans ou avec arrêt des déplacements desdits premier support 2 et second support 4.

Chacune des courses descendantes ou ascendantes peut aussi s'effectuer à des vitesses distinctes les unes par rapport aux autres.

Pour ce faire, ledit dispositif de soufflage 1 comporte des moyens de motorisation desdits premier support 2 et second support 4. De tels moyens de motorisation sont prévus électriques. En effet, la motorisation électrique permet, notamment, une précision dans l'indexation des déplacements des supports 2,4, tout en offrant un couple moteur important pour des vitesses de déplacements adaptées pour les étapes des opérations de soufflage, préférentiellement de soufflage-étirage.

Avantageusement, lesdits moyens de motorisation comportent au moins un premier actionneur 8 des déplacements dudit premier support 2 et au moins un second actionneur 9 des déplacements dudit second support 4. En d'autres termes, ledit premier actionneur 8 est solidaire dudit premier support 2 et assure ses premiers déplacements, notamment selon ladite seconde course descendante et selon ladite première course ascendante, tandis que ledit second actionneur 9 est solidaire dudit second support 4 et assure ses seconds déplacements, notamment selon ladite première course descendante et selon ladite seconde course ascendante.

L'invention prévoit de ne pas asservir les déplacements du second support 4 avec ceux du premier support 2. Pour ce faire, lesdits moyens de motorisation commandent de façon différenciée chaque première course et chaque seconde course. En somme, le premier support 2 peut se déplacer vers le haut ou vers le bas indépendamment du second support 4, et inversement, au travers de la commande de leur premier actionneur 8 et second actionneur 9 respectifs.

Selon l'invention, lesdits moyens de motorisation comprennent un unique contrôleur 10 desdits premier actionneur 8 et second actionneur 9. Ce contrôleur 10 est donc à même de gérer seul les déplacements des deux actionneurs 8,9 des supports 2,4.

En particulier, ledit unique contrôleur 10 peut transmettre des signaux de commande, notamment électrique, vers les premier actionneur 8 et second actionneur 9, assurant individuellement, d'une part, les déplacements du premier support 2 et, d'autre part, les déplacements du second support 4.

En outre, ledit contrôleur 10 permet de gérer les courses des premier actionneur 8 et second actionneur 9 en fonction de leur position respective, limitant lesdites courses pour éviter toute collision desdits premier support 2 et second support 4 entre eux lors de leur déplacement.

De façon connexe, lesdits moyens de motorisation peuvent comprendre des moyens de guidage 11 des premier actionneur 8 et second actionneur 9. Ces moyens de guidage 11 assurent le maintien des actionneurs 8,9 lors de leur mouvement et transmettent l'entraînement indépendant à chacun desdits actionneurs 8,9. Dans ce cas de figure, lesdits moyens de guidage 11 sont directement reliés audit contrôleur 10, ce dernier pouvant même être directement monté solidaire des moyens de guidage 11.

Selon l'invention, lesdits moyens de motorisation sont constitués par un moteur linéaire pourvu au moins d'un premier chariot comprenant ledit premier actionneur 8 et d'un second chariot comprenant ledit second actionneur 9.

Dès lors, lesdits premier et second chariots sont montés selon un déplacement coaxial, comme visible sur les figures.

En particulier, un tel moteur linéaire à double chariots peut être communément dénommé « long linear motor » ou « LLM ». Ledit moteur peut être un moteur synchrone à aimants permanents de type linéaire.

Un dispositif de soufflage selon l'invention peut être utilisé selon un procédé de soufflage, dans lequel au moins on introduit une préforme pourvue d'un buvant maintenu au sein d'un moule. En particulier, une fois introduite, la préforme est enserrée hermétiquement jusqu'à la fin du cycle de soufflage ou de soufflage-étirage, où le moule est ouvert pour la libérer.

Ensuite, le procédé peut consister dans n'importe quel ordre, successivement ou au moins en partie simultanément, en ce qu'on déplace selon une première course descendante la tuyère 5 en recouvrement dudit buvant en application hermétique sur ledit moule ; on déplace selon une seconde course descendante la tige d'étirage 3 jusqu'à pénétrer au sein de ladite préforme au travers de ladite tuyère 5 ; on déplace selon une première course ascendante ladite tige 3 jusqu'à s'extraire de ladite préforme ; on déplace selon une seconde course ascendante ladite tuyère 5.

Avantageusement, un tel procédé consiste à motoriser électriquement et contrôler les premières et secondes courses descendantes et ascendantes indépendamment pour ladite tige 3 et ladite tuyère 5. Cette dissociation permet donc d'opérer l'une et/ou l'autre desdites courses à n'importe quel moment, dans la limite où lesdits premier support 2 et second support 4 n'entrent pas en collision ou que l'un empêche le déplacement de l'autre. A titre d'exemple, la fin d'une course descendante du premier support 2 ne peut pas aller au-delà de la position actuelle du second support 4, comprenant une butée ; de même ma fin de course ascendante du second support 4 est restreinte et bornée par la position actuelle dudit premier support 2.

Préférentiellement, selon ledit procédé, on commande au travers d'un unique contrôleur 10 au moins deux chariots distincts actionnant de façon différenciée, d'une part, la première course descendante et la seconde course ascendante de ladite tuyère 5 et, d'autre part, la seconde course descendante et la première course ascendante de ladite tige 3. Comme évoqué précédemment, lesdites courses peuvent être assurées de façon continue ou discontinue, avec des vitesses propres à chaque support 2,4.

A ce titre, les figures 2 à 4 modélisent différentes phases du cycle de soufflage, notamment soufflage-étirage, représentant les premier support 2 et second support 4 dans différentes positions, mettant en évidence des exemples de vitesses de déplacement relatives des supports 2,4 au travers de flèches de différentes longueurs.

Sur l'exemple de la figure 2, la vitesse de déplacement selon une course descendante du premier support 2 peut être plus rapide que celle du déplacement selon la course descendante dudit second support 4. En effet, la tige d'étirage 3 ayant une course plus longue à parcourir, elle peut être actionnée de manière à se déplacer plus vite en vue de rentrer dans la préforme avant de commencer l'étirage. De plus, ladite tuyère 5 doit arriver en fin de course descendante en appui hermétique sur le moule et le buvant de la préforme, moment qui peut nécessiter une vitesse réduite afin d'éviter tout choc et détérioration dudit moule et/ou de ladite préforme et/ou du joint d'étanchéité équipant ladite tuyère 5.

Sur l'exemple de la figure 3, la vitesse de déplacement du premier support 2 est réduite, tandis que le second support 4 est arrêté, notamment en position de coiffage hermétique de la préforme dans le moule. Cette vitesse minimisée du premier support 2 peut dépendre des étapes de soufflage, en particulier de la formation préalable de ladite bulle au cours d'un présoufflage, avant que la vitesse soit maintenue voir accélérée ensuite pour poursuivre et opérer le reste du soufflage.

Sur l'exemple de la figure 4, la vitesse de déplacement du premier support 2 est plus importante que celle du second support 4, de sorte que la tige d'étirage 3 remonte et sorte du moule et du récipient soufflé, jusqu'à arriver en position haute de fin de course ascendante le plus rapidement possible. A l'inverse, en premier lieu, la tuyère 5 peut rester à l'arrêt en appui contre le moule, avant de remonter plus lentement pour libérer le moule et ledit récipient qui vient d'être soufflé.

## Revendications

1. Dispositif de soufflage (1), comprenant au moins un premier support (2) mobile équipé d'une tige d'étirage (3) et au moins un second support (4) mobile d'une tuyère (5), lesdits premier support (2) et second support (4) étant mobiles selon des déplacement verticaux réciproquement selon au moins une première course et au moins une seconde course, **caractérisé par le fait que** ledit dispositif de soufflage (1) comporte des moyens de motorisation électrique desdits premier support (2) et second support (4), lesdits moyens de motorisation comportant au moins un premier actionneur (8) des déplacements dudit premier support (2) et au moins un second actionneur (9) des déplacements dudit second support (8), lesdits moyens de motorisation commandant de façon différenciée chaque première course et chaque seconde course
dispositif dans lequel:
lesdits moyens de motorisation sont constitués par un moteur linéaire pourvu au moins d'un premier chariot comprenant ledit premier actionneur (8) et d'un second chariot comprenant ledit second actionneur (9);
lesdits moyens de motorisation comprennent un unique contrôleur (10) conçu pour commander de manière indépendante le premier actionneur (8) et le second actionneur (9).

2. Dispositif de soufflage (1) selon la revendication 1, **caractérisé par le fait que** le premier chariot est mobile le long d'une première trajectoire d'actionnement et le second chariot est mobile selon une deuxième trajectoire d'actionnement, lesdites première et deuxième trajectoires d'actionnement étant rectilignes.

3. Dispositif de soufflage (1) selon la revendication 2, **caractérisé par le fait que** lesdites première et deuxième trajectoires d'actionnement sont coaxiales.

4. Dispositif de soufflage (1) selon l'une quelconque des revendications précédentes, **caractérisé par le fait que** le premier chariot est mobile le long d'une première trajectoire d'actionnement et le second chariot est mobile selon une deuxième trajectoire d'actionnement, lesdites première et deuxième trajectoires d'actionnement étant parallèles l'une à l'autre.

5. Dispositif de soufflage (1) selon la revendication 4, **caractérisé par le fait que** lesdites première et deuxième trajectoires d'actionnement sont en totalité ou en partie confondues.

## Patentansprüche

1. Vorrichtung zum Blasformen (1), die mindestens einen ersten bewegbaren Träger (2), der mit einer Reckstange (3) ausgerüstet ist, und mindestens einen zweiten bewegbaren Träger (4) einer Düse (5) beinhaltet, wobei der erste Träger (2) und der zweite Träger (4) gemäß mindestens einem ersten Hub und mindestens einem zweiten Hub wechselseitig gemäß vertikalen Bewegungen bewegbar sind, **dadurch gekennzeichnet, dass** die Vorrichtung zum Blasformen (1) Mittel zum elektrischen motorischen Antreiben des ersten Trägers (2) und des zweiten Trägers (4) umfasst, wobei die motorischen Antriebsmittel mindestens ein erstes Stellglied (8) für die Bewegungen des ersten Trägers (2) und mindestens ein zweites Stellglied (9) für die Bewegungen des zweiten Trägers (4) umfassen, wobei die motorischen Antriebsmittel jeden ersten Hub und jeden zweiten Hub differenziert steuern,
wobei in der Vorrichtung:
die motorischen Antriebsmittel aus einem Linearmotor bestehen, der über mindestens einen ersten Schlitten, der das erste Stellglied (8) beinhaltet, und einen zweiten Schlitten, der das zweite Stellglied (9) beinhaltet, verfügt,
die motorischen Antriebsmittel einen einzigen Controller (10) beinhalten, der dazu ausgelegt ist, das erste Stellglied (8) und das zweite Stellglied (9) unabhängig zu steuern.

2. Vorrichtung zum Blasformen (1) nach Anspruch 1, **dadurch gekennzeichnet, dass** der erste Schlitten entlang eines ersten Betätigungswegs bewegbar ist und der zweite Schlitten gemäß einem zweiten Betätigungsweg bewegbar ist, wobei der erste und der zweite Betätigungsweg geradlinig sind.

3. Vorrichtung zum Blasformen (1) nach Anspruch 2, **dadurch gekennzeichnet, dass** der erste und der zweite Betätigungsweg koaxial sind.

4. Vorrichtung zum Blasformen (1) nach einem der vorhergehenden Ansprüche, **dadurch gekennzeichnet, dass** der erste Schlitten entlang eines ersten Betätigungswegs bewegbar ist und der zweite Schlitten gemäß einem zweiten Betätigungsweg bewegbar ist, wobei der erste und der zweite Betätigungsweg zueinander parallel sind.

5. Vorrichtung zum Blasformen (1) nach Anspruch 4, **dadurch gekennzeichnet, dass** der erste und der zweite Betätigungsweg vollständig oder teilweise übereinstimmen.

## Claims

1. Blow moulding apparatus (1), comprising at least a first movable support (2) equipped with a draw rod (3) and at least a second movable support (4) of a nozzle (5), said first support (2) and second support (4) being movable over vertical movements, reciprocally along at least a first path and at least a second path, **characterized in that** said blow moulding apparatus (1) comprises means for electrically driving said first support (2) and second support (4), said drive means comprising at least a first actuator (8) of the movements of said first support (2) and at least a second actuator (9) of the movements of said second support (4), said drive means controlling each first path and each second path in a differentiated manner,
in which device:
said drive means are constituted by a linear motor provided with at least a first carriage comprising said first actuator (8) and a second carriage comprising said second actuator (9);
said drive means comprise a single controller (10) designed so as to independently control the first actuator (8) and the second actuator (9).

2. Blow moulding apparatus (1) according to Claim 1, **characterized in that** the first carriage is movable along a first actuation trajectory and the second carriage is movable along a second actuation trajectory, said first and second actuation trajectories being rectilinear.

3. Blow moulding apparatus (1) according to Claim 2, **characterized in that** said first and second actuation trajectories are coaxial.

4. Blow moulding apparatus (1) according to any one of the preceding claims, **characterized in that** the first carriage is movable along a first actuation trajectory and the second carriage is movable along a second actuation trajectory, said first and second actuation trajectories being parallel to one another.

5. Blow moulding apparatus (1) according to Claim 4, **characterized in that** said first and second actuation trajectories are entirely or partly coincident.
